# EUROPEAN PATENT APPLICATION

(11) **EP 3 845 849 A1**
(43) Date of publication of application: **07.07.2021**
(21) Application number: 19854334.0
(22) Date of filing: 16.08.2019
(51) Int. Cl.: F26B 3/347, F26B 11/04, F26B 23/08

(54) **GRAIN-DRYING MACHINE AND MULTISTEP METHOD FOR DRYING GRAIN**

(30) Priority: 31.08.2018 CO 18009196
(71) Applicant: Tecniares S.A.S., Girón, Santander (CO)
(72) Inventor: ARDILA DUARTE, Alvaro, Flodiblanca, Santander (CO)
(74) Representative: Curell Suñol S.L.P.
(86) International application number: PCT/IB2019/056956
(87) International publication number: WO 2020/044162

(57) **Abstract**

The invention discloses drying systems and drying processes, particularly designed to efficiently dry grains. The grain drying system of the invention comprises a machine consisting of a drying rotor characterized by containing thermal panels and having an efficient design that allows air circulation. Alternatively, the grain drying system is consisting of a drying rotor comprising thermal panels and an efficient air circulation system, together with a vacuum rest rotor for the grains. The invention also relates to a grain drying process comprising a stage in a drying rotor consisting of thermal panels and an efficient air circulation system, and optionally a second vacuum rest stage in a vacuum rest rotor, where the first and second stages alternate one, two, three or more times as required. In general, the systems and processes disclosed in the invention involve elements and stages that allow the grain to be dried by controlled heating of the grain by exposure to electromagnetic radiation and efficient air flow., or through multiple stages that comprise controlled heating of the grain by exposure to electromagnetic radiation and efficient air flow, the rest of the grains under vacuum, and a new stage of controlled heating of the grain by exposure to electromagnetic radiation and efficient air flow thus achieving high efficiency in drying times without altering the structure of the grains and without generating polluting emissions, since the system does not require fossil fuels for its operation.

**International patent classification:** Drying procedures for solid materials with and without the use of heat (F26B 7/00)

**Technology sector:** Mechanics

## Description

### Field of the invention

The present invention belongs to the field of mechanics and consists of systems and processes for drying beans, particularly coffee beans. Said drying systems and drying processes combine controlled heating of the grains by electromagnetic radiation and resting stages of the grains under vacuum, thus managing to eliminate or reduce the humidity of the grains in a significantly short time and in a 100% ecological way, since these systems and processes do not generate polluting emissions as they do not require fossil fuels for their operation.

### Background of the invention

The artificial drying of grains is a widely spread and used practice in the agricultural field, having a significant impact on the costs and quality of the crops. In fact, the process of artificial drying of beans corresponds to the main cause of their transformation in the postharvest, being necessary to do it carefully so as not to affect their quality.

The main objective of drying is to reduce the humidity of the beans to levels that are safe for storage and optimal for marketing, being usual to do it in a traditional way by drying in the sun (in which the solar energy heats the bean while the air currents drag the humidity) or by mechanical drying (in which the air is artificially heated and flows through the wet beans).

Historically, natural drying in the sun has been recognized as the ideal mechanism to maintain all the physical-chemical and organoleptic qualities of beans. However, this mechanism turns out to be radically inefficient, so there is a need to design and develop systems to increase the efficiency of the process.

Indeed, today a significant number of drying machines are known that make use of solar energy or electrical/mechanical energy for the processing of a wide variety of beans, including coffee beans. In general, such systems meet the objective of drying beans in a uniform way through the use of hot air streams/flows in a system with compartments of different dimensions and parameters.

Thus, for example, patent document US5960560 discloses a solar thermal dehydrator that comprises a plurality of drying chambers inside it and a plurality of perforated trays on which the beans to be dried are placed. For its part, a mechanical structure is in charge of forcing the air flow in and out of the drying chambers, while a second structure is responsible for allowing sunlight to heat the air that passes through the drying chambers, thus achieving dehydration of the beans placed on the perforated trays.

While the previous drying machine uses solar energy to heat the air that comes into contact with the beans, at present it is fully recognized that this mechanism is not sufficient to carry out an efficient drying process, since it requires excessive time to complete the process and usually entails multiple difficulties related to the weather.

For its part, patent document CN105285090 reveals a bean drying machine that uses continuous vacuum and low temperature far infrared heating. According to the inventors, said drying machine comprises a feed hopper, a rotary vacuum feed valve, a rotary vacuum feed valve discharge port and several vacuum drying discs, wherein an interval is arranged between the discharge port of the vacuum rotary feeding valve and each vacuum drying disc, so that the grains are evenly spread on the vacuum drying disc along rotation of the vacuum drying disc.

On the other hand, a far infrared heating device is arranged above the vacuum drying disc, guaranteeing a slow and uniform heating of the beans. For their part, the inventors emphasize the use of vacuum tubes arranged between the vacuum drying discs, so that hot air and humid steam are sucked through said vacuum tubes. Finally, the beans are cooled by a cooling section, and discharged through a rotary vacuum discharge valve on a lifting machine.

Then, said patent document CN105285090 reveals a drying process that incorporates a vacuum drying stage and makes use of a heat source of low-range infrared rays, but it does not define in any way the degree of efficiency achieved, nor does it mention the use of alternative sources of energy for the drying process, nor the use of cyclical stages to improve said process.

Another type of bean drying system is disclosed in patent CN 105309609, basically consisting of a movable type of spiral roller grain dryer. This bean dryer uses solar energy and air energy, and is complemented by the use of electrical energy, so that a series of solar energy collector elements, a layer suitable for heat preservation and a set of hot air tubes are placed on the roof the enclosure designed to carry out the drying process. According to its inventors, such a dryer has the advantage of being structurally simple, low cost, notable in energy saving, emission reducing effect, and high drying speed.

In accordance with the above, said document reveals a bean drying machine that takes advantage of solar energy, either to heat the air or the beans, along with the complementary use of electrical energy. However, the efficiency achieved suggests that it does not correspond to a suitable design for handling large volumes of wet beans.

For its part, patent US6209223 reveals a bean drying system that consists of two main parts: a hot drying air generator and a modular, portable drying bin. Said air generator incorporates a heat pipe design which enhances the efficiency of a dehumidifier heat pump, making its use economically feasible, especially for humid climates. It also incorporates a series of burners that act as anti-pollution systems.

The hot air generator can run on many energy sources, including electricity, gasoline, diesel, biomass, wood, charcoal, rice husk, or even solar energy. The modular tray is made of various modules that can be conveniently disassembled, transported and reassembled. The design also creates a very low air pressure drop, allowing for substantial fan energy savings.

The previous device presents as an additional characteristic element an air dehumidifier. However, it does not incorporate elements that make the air flow efficient through the mass to be dried, since the air comes from a source in a horizontal direction but is distributed in a high place. Likewise, the set of claims does not define a drying method with alternate stages, ranging for example from conventional drying to vacuuming.

From all of the above it is clear that the dryers known in the state of the art have as objectives the reduction of energy costs and environmental damage, together with the significant reduction of drying time. In addition, it seeks to take advantage of different sources of energy to improve the elimination of humidity and even facilitate the use of the dryer at night, when there is no access to solar energy. However, none of these existing devices and processes turns out to be completely efficient basically due to the high complexity of the bean drying process.

Considering the above, it is clear that in the state of the art there is still a need to develop systems and processes that allow increasing the efficiency of bean drying, since this will always mean the optimization of agro-industrial processes.

### General description of the invention

Now, taking into account the teachings of the prior art and based on the operation of the different types of bean drying machines known up to now, the applicant of the invention in question considered that an efficient way to carry out the bean drying process is through the particular combination of a stage that involves the controlled heating of the beans by electromagnetic radiation, simultaneously with the dragging of moisture from said beans by efficient air circulation through the beans. Alternatively, the bean drying process results from the particular combination of a stage that involves the controlled heating of the beans by electromagnetic radiation, simultaneously with the dragging of moisture from said beans by efficient air circulation through the beans, a stage of rest in vacuum of the beans that speeds up the drying process by encouraging the migration of moisture towards the surface of the beans, and a new drying stage that involves controlled heating of the beans by electromagnetic radiation, simultaneously with the dragging of moisture from said beans by efficient air circulation through the beans.

The above is achieved by implementing a drying machine comprising a drying rotor characterized by having inside a source of electromagnetic radiation, which is emitted in such a way that it is able to heat in a controlled and efficient way the wet beans inside the rotor, and an efficient ventilation system that allows air to enter, hot and dry, that passes through the beans and carries moisture away from them when it is extracted from the rotor.

Additionally, the invention relates to a vacuum rest rotor characterized by comprising a vacuum rest rotor, in which the beans inside are subjected to a controlled vacuum and temperature, in order to speed up the drying process by encouraging the migration of moisture to the surface of the beans.

The invention also relates to a drying process comprising putting the wet beans into a drying rotor, in which the wet beans are heated when they come into contact with the electromagnetic radiation emitted by the thermal panels that are located inside the drying rotor and emit electromagnetic radiation. The drying rotor additionally comprises an efficient ventilation system, that lets, through the baffles attached to cargo and fixed vent caps, the entry of dry and hot air by solar radiation, where said air, once it has captured the surrounding moisture in the cavities of the drying rotor, is removed by the action of an extractor.

In a further embodiment, the drying process of the invention comprises a first stage in a drying rotor in which the wet beans are heated when they come into contact with the thermal radiation emitted by the thermal panels that are located inside the drying rotor and emit electromagnetic radiation. The drying rotor additionally comprises an efficient ventilation system, that allows, through the baffles attached to cargo and fixed vent caps, the entry of dry and hot air by solar radiation, where said air, once it has captured the surrounding moisture in the cavities of the drying rotor, is removed by the action of an extractor. Wherein, the drying process of the invention comprises a second stage of resting the beans under vacuum in a specialized rotor to generate said vacuum, combined with a controlled temperature, and a third drying stage that comprises placing the beans in a drying rotor in which the wet beans are heated when they come into contact with the thermal radiation emitted by the thermal panels that are located inside the drying rotor and emit radiation. electromagnetic, and where the drying rotor additionally comprises an efficient ventilation system, that allows, through the baffles attached to cargo and fixed vent caps, the entry of dry and hot air by solar radiation, where said air, once it has captured the surrounding moisture in the cavities of the drying rotor, is removed by the action of an extractor.

Said alternating combination of the stages of drying by heating and dragging the humidity, and resting in vacuum, manages to reduce and/or eliminate the humidity of the beans in a significantly short time. Essentially, this dryer heats the bean to be dried in a controlled manner, which represents efficient gains in terms of time and energy.

The energy sources for the operation of the present invention include, but are not limited to, solar energy and electrical energy, so that the systems and processes of the invention are 100% ecological, since the system does not require fossil fuels, and therefore no polluting emissions are generated.

### Description of Figures

The FIGURE 1 are two schematic views of the drying rotor (1) of the invention fully assembled.
The FIGURE 2 shows the exploded view of the drying rotor (1) of the invention.
The FIGURE 3 shows the exploded view of thermal panel type 1 (13) of the invention.
The FIGURE 4 shows the exploded view of thermal panel type 2 (14) of the invention.
The FIGURE 5 shows a section (A) of the drying rotor (1) of the invention, where the position of type 1 (13) and type 2 (14) thermal panels can be seen.
The FIGURE 6 shows three schematic views of the vacuum rest rotor (34) of the invention fully assembled.
The FIGURE 7 shows a section (A) of the vacuum rest rotor (34) of the invention.
The FIGURE 8 shows the exploded view of vacuum rest rotor (34) of the invention.
The FIGURE 9 shows a front view (A) and a side view (B) of the location of the drying (1) and vacuum rest (34) rotors of the system of the invention in a structure that contains them, including the different accessories necessary for the operation of the dryer.

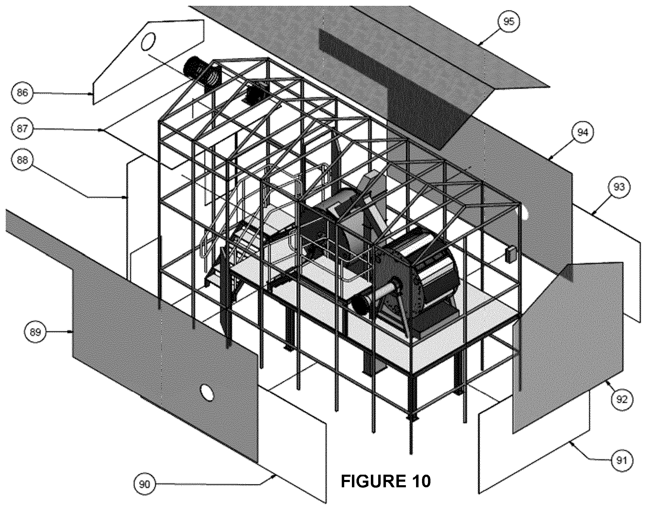

The FIGURE 10 shows again the drying (1) and vacuum rest (34) rotors of the system of the invention, installed in the structure that contains them and with the covers separated from the structure.

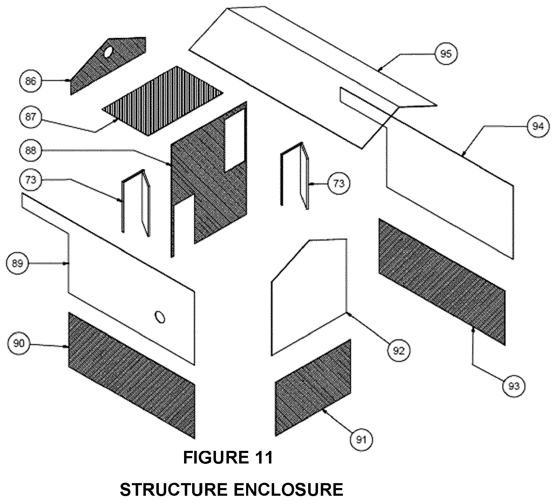

The FIGURE 11 shows the arrangement of the covers that cover the structure that contains the drying (1) and vacuum rest (34) rotors of the drying system of the invention.

### Description of the elements that make up the system for drying beans of the invention

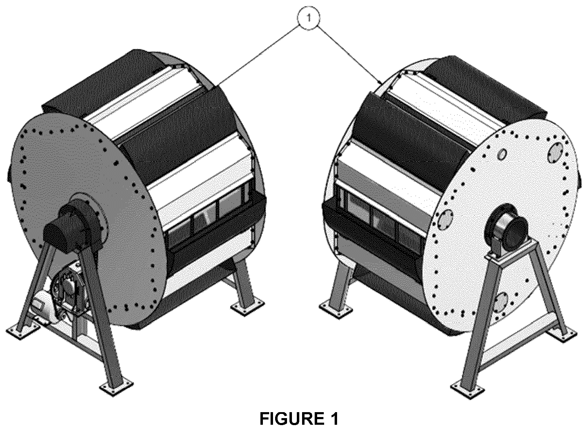

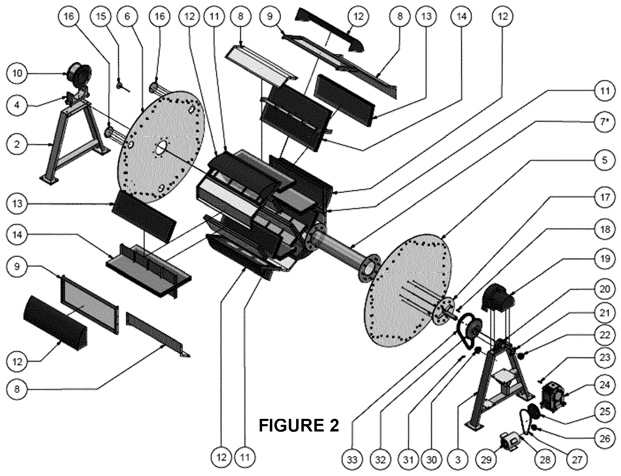

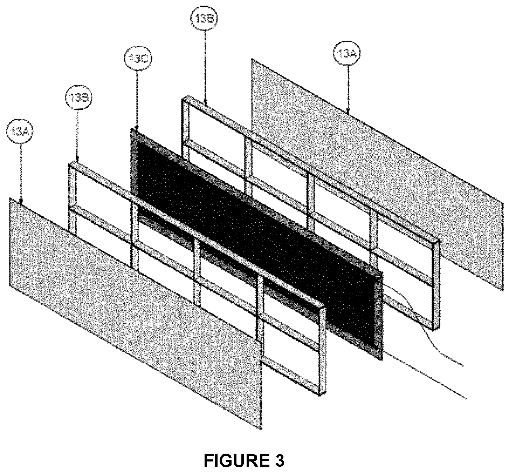

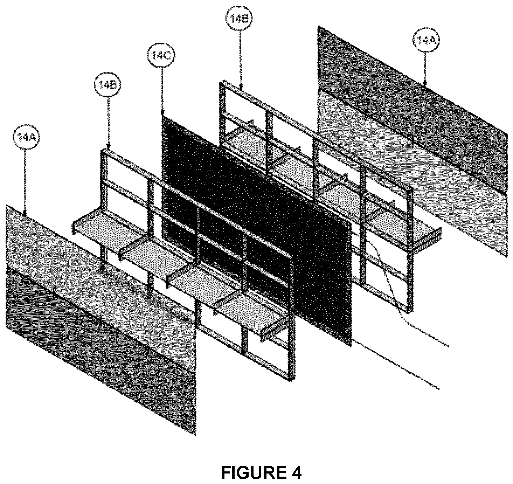

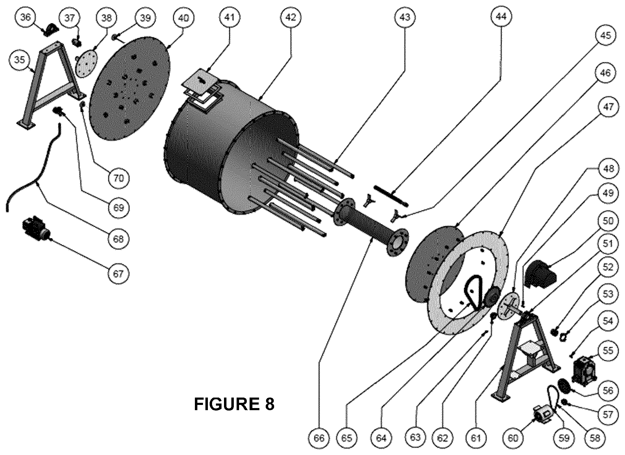

**(1)** Drying rotor.
**(2)** Left metal bracket that corresponds to a metal structure that supports the metal bearing (4).
**(3)** Right metal bracket that corresponds to a metal structure that supports the self-align bearing (20), the gear motor (24), the electric motor (29) and the protective cover (19).
**(4)** Metal bearing which corresponds to a casting on which the metallic bushing (10) is fixed with screws to the left metal bracket (2), together they support the left side of the drying rotor (1).
**(5)** Plate located on the transmission side of the drying rotor (1) which corresponds to a metal disc to which the drive shaft (17) and the rotor center duct (7) are secured by screws.
**(6)** Plate located on the suction side of the drying rotor (1) that corresponds to a metallic disc to which the metallic bushing (10) and the rotor center duct (7) are secured by means of screws.
**(7)** Rotor center duct corresponds to a plastic or metal tube which is built with a perforated sheet and two flanges, it is secured with screws on one side to the transmission side dish (5) drying rotor (1) and on the other side to the suction side plate (6) of the drying rotor (1).
**(8)** Fixed cover of the rotor that corresponds to a metallic or plastic structure which is fixed by screws to the plates (5) and (6). FIGURES 1 and 2.
**(9)** Fixed vent cap comprising a metal or plastic structure that has a perforated metal sheet through which the air enters the drying rotor (1), which is secured with screws to the plates (5) and (6) and to the Air collector deflector (12).
**(10)** Metallic bushing that corresponds to a cast piece that rotates on the metal bearing (4) and is tied on the left side with screws to the suction side plate (6).
**(11)** Loading window frame which is a metal or plastic structure that carries a perforated metal sheet through which the air enters the drying rotor (1) and is secured to the air collector deflector (12).
**(12)** Air collector deflector that corresponds to a metallic piece to which the loading window frame (11) is secured. These two pieces (11) and (12) are installed with hinges to the fixed cover of the rotor (8). This device thus assembled, when opened, allows the passage of the coffee beans to the internal part of the drying rotor (1), and when closed, allows the passage of air into the drying rotor (1) through the perforated sheet fasten to loading window frame (11).
**(13)** Thermal panel type 1 that corresponds to a metallic or plastic structure that is secured by screws to the plates (5) and (6).
   **(13A)** Perforated metal or plastic sheet that protects the source of electromagnetic radiation (13C) and allows infrared radiation to pass through its perforations. FIGURE 3.
   **(13B)** Metallic support to which the source of electromagnetic radiation (13C) and the metallic or plastic sheet (13A) are attached by screws. FIGURE 3.
   **(13C)** Source of electromagnetic radiation that corresponds to a fiberglass sheet that has carbon crystals printed on it and an electrical circuit. FIGURE 3.
**(14)** (14) Thermal panel type 2 that corresponds to a metallic or plastic structure that is secured by screws to the plates (5) and (6), and that has a screen secured in its middle part that corresponds to a sheet that helps to move the beans inside the drying rotor (1).
   **(14A)** Perforated metallic or plastic sheet that protects the source of electromagnetic radiation (14C) and allows infrared radiation to pass through its perforations. FIGURE 4.
   **(14B)** Metallic support to which the source of electromagnetic radiation (14C) and the metallic or plastic sheet (14A) are attached by screws. FIGURE 4.
   **(14C)** Source of electromagnetic radiation that corresponds to a fiberglass sheet that has carbon crystals printed on it and an electrical circuit. FIGURE 4.
**(15)** Thermometer, which is installed in the plate (6) located on the suction side of the drying rotor (1)
**(16)** Lid for sampling that corresponds to a transparent plastic lid which is installed on the plate (6) located on the suction side of the drying rotor (1) and which is easy to remove to allow sampling. FIGURE 2.
**(17)** Drive shaft that corresponds to a metallic piece composed of a metallic flange to which a steel shaft end and metallic reinforcements are welded. This set is secured by means of screws, on the right side, to the plate (5) located on the transmission side and houses the wedge (18) which drives the large chain sprocket (32) that is mounted on the shaft. The whole assembly rests on the Self align bearing (20) which is secured to the right metal bracket (3) and together they support the right part of the drying rotor (1).
**(18)** Wedge corresponds to a metal piece that is housed in the drive shaft (17) and joins it to the large chain sprocket (32).
**(19)** Protective cover that corresponds to a metal or plastic piece that is fixed with screws to the right metal bracket (3), isolates and protects the Self align bearing (20), the large chain sprocket (32), the link chain (33), the manifold (22) and the brush holder (21).
**(20)** Self-align bearing that supports the drive shaft (17) and is secured by screws to the right metal bracket (3) and together they support the right part of the drying rotor (1).
**(21)** Brush holder that corresponds to an insulating piece installed on the manifold (22) which has two brushes through which the electric current is transmitted to the copper bushings of the manifold (22) and these in turn transmit it to the thermal panels type 1 (13) and type 2 (14).
**(22)** Manifold that corresponds to an insulating piece that is mounted on the tip of the drive shaft (17) and rotates with it, it has two copper bushings that are connected to the type 1 (13) and type 2 (14) electrical panels.
**(23)** Wedge that corresponds to a metal part that is housed in the transverse shaft of the gear motor (24) and drags the small chain sprocket (30).
**(24)** Gear motor that corresponds to a speed reduction box that has a horizontal and a transverse axis mounted on ball bearings, a helical pinion is installed on the horizontal axis that transmits the movement to the transverse axis which has a worm screw installed. This device allows reducing the speed of the horizontal axis to the transverse axis and in turn changes the position of the transmission shafts, it is secured with screws to the right metal bracket (3).
**(25)** Large V-pulley corresponds to a metal piece that is mounted on the horizontal axis of the gear motor (24) and receives the movement of the v belt (27) and transmits it through the gear motor (24) to the small chain sprocket (30).
(26) Small V-pulley that corresponds to a metal part that is mounted on the electric motor shaft (29).
**(27)** V belt that corresponds to a synthetic transmission belt, is used to transmit movement between the large V-pulley (25) and the small V-pulley (26).
**(28)** Wedge that corresponds to a metal part that is housed in the electric motor shaft (29) and drives the small V-pulley (26).
**(29)** Electric motor.
**(30)** Small chain sprocket that corresponds to a toothed metal piece that is installed on the transverse shaft of the gear motor (24) and is connected to it by means of the wedge (23) and the set screw (31), transmitting the movement to the link chain (31).
**(31)** Set screw that corresponds to a steel screw that secures the small chain sprocket (30) to the cross shaft the gear motor (24).
**(32)** Large chain sprocket that corresponds to a toothed metal piece that is attached to the drive shaft (17) through the wedge (18) and receives the movement of the link chain (33).
**(33)** Link chain that corresponds to a piece that transmits the movement to the drive shaft (17) through the large chain sprocket (32) and this in turn transmits it to the drying rotor (1).
**(34)** Vacuum rest rotor.
**(35)** Left Metal Bracket that corresponds to a metallic structure that supports the Self align bearing (36).
**(36)** Self-align bearing that supports the drive shaft (38) and is secured by screws to the left metal bracket (35) and together they support the left part of the vacuum rest rotor (34).
**(37)** Rotating air connector that corresponds to a mechanical device that allows air to pass between the vacuum rest rotor (34) and the vacuum pump (67) when the vacuum rest rotor (34) is in motion and the vacuum pump (67) is permanently installed.
**(38)** Drive shaft that corresponds to a metal part composed of a metal flange to which a steel shaft end and metal reinforcements are welded. This set is fastened on the left side to the rotor plate on the suction side of the pump (40) using screws. The whole assembly rests on the Self align bearing (36) which is secured to the left metal bracket (35) and together they support the left part of the vacuum rest rotor (34).
**(39)** Thermometer that is installed in the rotor plate on the suction side of the pump (40) of the vacuum rest rotor (34) and that is used to measure the temperature of the beans during the vacuum rest process.
**(40)** Rotor plate on the suction side of the vacuum pump that corresponds to a metal disc that is attached by screws to the cylinder (42) of the vacuum rest rotor (34) and to this disc the drive shaft (38) is secured by screws.
**(41)** Vacuum rest rotor loading window cover that corresponds to a metal or plastic sheet that is installed in the cylinder (42) of the vacuum rest rotor (34) by means of screws.
**(42)** Vacuum rest rotor cylinder that corresponds to a tubular structure built in sheet. To the cylinder (42), the rotor plate (40) on the suction side of the pump is attached by means of screws, and the transmission side outer plate (47).
**(43)** Reinforcement tubes of the vacuum rest rotor (34) corresponding to metal tubes secured to the transmission side center plate (46) and to the rotor plate on the suction side of the vacuum pump (40). FIGURE 8.
**(44)** Electrical resistance, which is mounted on the vacuum rest rotor resistance supports (45), which in turn are installed inside the center duct rotor (66) to generate heat which in turn radiates towards the internal part of the vacuum rest rotor (34) through the perforated sheet of the center duct rotor (66).
**(45)** Supports of the resistance of the vacuum rest rotor that correspond to two metallic structures in which the electrical resistance is installed (44).
**(46)** Central plate on the transmission side of the vacuum rest rotor (34) that corresponds to a metal disc, which is secured to the external plate (47) on the transmission side by screws and, in turn, this plate (46) is secured to the drive shaft (48) by screws.
**(47)** External plate on the transmission side of the empty rotor (34) that corresponds to a metal disc which is attached to the cylinder vacuum rest rotor (42) and to the central plate (46) on the transmission side by means of screws.
**(48)** Drive shaft corresponds to a metallic piece composed of a metallic flange to which a steel shaft end and metallic reinforcements are welded. This assembly is fastened to the right side to the central plate (46) of the side of the transmission using screws, which also houses the wedge (49) which drags the large chain sprocket (64) that is mounted on the shaft. The whole assembly rests on the Self align bearing (51) which is secured to the right metal bracket (61) and together they support the right part of the vacuum rest rotor. (34).
**(49)** Wedge that corresponds to a metal piece that is housed in the drive shaft (48) and joins it to the large chain sprocket (64).
**(50)** Protective cover that corresponds to a metal or plastic piece that is fixed with screws to the right metal bracket (61), and its function is to isolate and protect the Self align bearing (51), the large chain sprocket (64), the link chain (58), the manifold (52) and the brush holder (53).
**(51)** Self-align bearing that supports the drive shaft (48) and is secured by screws to the right metal bracket (61) and together they support the right part of the vacuum rest rotor (34).
**(52)** Brush holder corresponds to an insulating piece installed on the manifold (53) which has two brushes through which the electric current is transmitted to the copper bushings of the manifold (53) and these in turn transmit it to the electric resistance (44).
**(53)** Manifold that corresponds to an insulating piece that is mounted on the tip of the drive shaft (48) and rotates with it, it has two copper bushings that are connected to the electrical resistance (44).
**(54)** Wedge corresponds to a metal piece that is housed in the transverse shaft the gear motor (55) and carries the small chain sprocket (62).
**(55)** Gear motor that corresponds to a speed reduction box that has a horizontal and a transverse axis mounted on ball bearings, a helical pinion is installed on the horizontal axis that transmits the movement to the transverse axis which has a worm screw installed. This device allows reducing the speed from the horizontal axis to the transverse axis and in turn changes the position of the transmission shafts, it is secured with screws to the right metal bracket (61).
**(56)** Large V-pulley that corresponds to a metal piece that is mounted on the horizontal axis of the gear motor (55) and receives the movement of the v belt (58) and transmits it through the gear motor (55) to the small chain sprocket (62).
**(57)** Small V-pulley that corresponds to a metal part that is mounted on the electric motor shaft (60).
**(58)** V belt that corresponds to a synthetic transmission belt and is used to transmit movement between the large V-pulley (56) and the small V-pulley (57).
**(59)** Wedge that corresponds to a metal part that is housed in the electric motor shaft (60) and drives the small V-pulley (57).
**(60)** Electric motor.
**(61)** Right metal bracket that corresponds to a metal structure that supports the Self align bearing (51), the gear motor (55), the electric motor (60) and the protective cover (50).
**(62)** Small chain sprocket that corresponds to a toothed metal piece that is installed on the transverse shaft the gear motor (55) and is connected to it by means of the wedge (54) and the set screw (63), transmitting the movement to the link chain (65).
**(63)** Set screw that corresponds to a steel screw that secures the small chain sprocket (62) to the cross shaft the gear motor (55).
**(64)** Large chain sprocket that corresponds to a toothed metal piece that is attached to the drive shaft (48) and receives the movement of the link chain (65).
**(65)** Link chain which fulfills the function of transmitting the movement to the drive shaft (48) through the large chain sprocket (64) and this in turn transmits it to the vacuum rest rotor (34).
**(66)** Center rotor duct that corresponds to a plastic or metal tube which is built with a perforated sheet and two flanges, and that is secured with screws on one side to the transmission side center plate (46) and on the other side to the rotor plate on the suction side (40) of the vacuum pump.
**(67)** Vacuum pump that corresponds to an electric pump that extracts the air to the vacuum rest rotor (34).
**(68)** Interconnection hose that corresponds to a plastic duct with fittings used to interconnect the vacuum pump (67) with the vacuum rest rotor (34).
**(69)** Solenoid valve that corresponds to a solenoid valve that allows air to pass into the vacuum pump only when the vacuum pump (67) is on.
**(70)** Vacuum switch corresponding to a vacuum meter with its fittings and bypass valve, installed in the vacuum rest rotor (34).
**(71)** Cooling coil that corresponds to a complementary structure of the dehumidifier (72). The cooling coil (71) is constructed of copper tubing, through which Freon gas is circulated to lower the temperature of the surrounding air, and in this way loses much of its moisture, thus improving the internal conditions of the drying system.
**(72)** Dehumidifier corresponds to a machine composed of elements such as a compressor, condensers, radiator, electrical connections and pipes through which freon gas is circulated through the cooling coil (71) to lower the temperature of the surrounding air.
**(73)** Doors that correspond to metallic structures lined with eterboard sheet that allow entry to the area where the drying rotors (1) and the vacuum rest rotor (34) are installed.
**(74)** Covered support structure that corresponds to a metallic structure that supports the parts (86) to (95) and the doors (73).
**(75)** Retractable Duct that corresponds to two metallic or plastic ducts that are installed at the outlet of the two-way valve (76).
**(76)** Two-way valve that corresponds to a device made of metal sheet is installed in the upper part of the elevator (77) and allows unloading the beans for one or the other rotor.
**(77)** Elevator corresponds to a mechanical device that transports the beans from a low level to a higher one.
**(78)** Extractor that corresponds to an electric fan that extracts the humid air from the drying rotor (1).
**(79)** Electrical panel that corresponds to a metal box that contains all the controls, starters, electrical and electronic protective covers to control the system of the invention.
**(80)** Extractor duct that corresponds to a metal tube installed between the metallic bushing (10) and the extractor (78), which allows the passage of humid air sucked in by the extractor (78).
**(81)** Support structure and access to rotors that corresponds to a metallic platform with stairs on which the rotors (1) and (34) are installed.
**(82)** Hopper of the drying rotor that corresponds to a container made of metal or plastic sheets, used to deposit the beans that go to the drying rotors (1) or vacuum (34).
**(83)** Blade valve that corresponds to a metal or plastic sheet, is used to allow or prevent the passage of the beans from the vacuum rest rotor (85) and the drying rotor (82) to the elevator loading hopper (84).
**(84)** Elevator loading hopper that corresponds to a container made of metal or plastic sheet that stores the beans that go to the elevator (77).
**(85)** Draining hopper of the vacuum rest rotor that corresponds to a container made of metal or plastic sheets, and that is used to deposit the beans that go to the drying (1) or vacuum (34) rotors.
**(86)** Upper front wall corresponding to a partition built with sheets, which encloses the upper front part of the covered support structure (74).
**(87)** Roof separating platform that corresponds to the ceiling that covers the intermediate part of the covered support structure (74).
**(88)** Lower front wall that corresponds to a division built with eterboard sheets, which encloses the lower front part of the covered support structure (74).
**(89)** Upper left side wall that corresponds to divisions built with solar panels, plastic, glass or any other material that allows the passage of solar rays.
**(90)** Lower walls that correspond to divisions built with eterboard sheets, which enclose the lower part of the covered support structure (74).
**(91)** Lower walls that correspond to divisions built with eterboard sheets, which enclose the lower part of the covered support structure (74).
**(92)** Upper rear wall that corresponds to a partition built with solar panels, plastic, glass or any other material that allows the passage of solar rays.
**(93)** Lower walls that correspond to divisions built with eterboard sheets, which enclose the lower part of the covered support structure (74).
**(94)** Upper right-side wall that corresponds to a partition built with solar panels, plastic, glass or any other material that allows the passage of solar rays.
**(95)** Roof that corresponds to a structure built with solar panels, plastic, glass or any other material that allows the passage of solar rays.

### Detailed description of the invention

In addition to what was previously stated, the object of this application may be appreciated in detail through the subsequent description of the structure and operation of the system and process developed.

According to FIGURES 1 and 2, a first particular embodiment of the invention relates to a drying system made up of a drying rotor (1) whose external structure comprises a plate (5) located on the transmission side of the drying rotor (1) and a plate (6) located on the suction side of the drying rotor (1), among which are at least seven, six, five or four fixed covers (8), at least one, two or three vent caps (9), at least one, two or three loading window frames (11) and at least one, two or three air collectors deflectors (12).

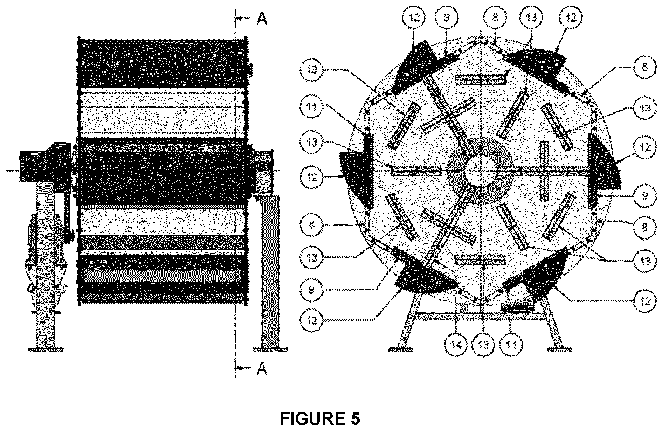

In a preferred embodiment, the drying rotor (1) of the invention internally comprises at least one, two or three cavities, where each cavity is delimited by the rotor center duct (7), two type 2 thermal panels (14), the fixed rotor cover (8), and the fixed vent cap (9) as shown in a non-limiting manner in FIGURE 5.

In a particular embodiment, the rotor center duct (7) is a plastic or metallic tube which is built with perforated sheet and two flanges. Where the rotor center duct (7) is secured with screws on one side to the transmission side dish (5) of the drying rotor (1) and on the other side to the suction side plate (6), as shown in FIGURE 2.

Preferably, the fixed rotor covers (8), and the fixed ventilation caps (9) are fixed by screws to the plates (5) and (6). On the other hand, each loading window frame (11) and each fixed vent cap (9) has an air collector deflector (12). Where each fixed vent cap (9) comprises a metal or plastic structure that has a perforated metal sheet through which the air enters the drying rotor (1) and where the loading window frame (11) is a metal or plastic structure that carries a perforated metal sheet, and together with an air collector deflector (12) it is secured by hinges to the adjacent fixed rotor cover (8), so that this device when open allows the passage of the coffee beans to the internal part of the drying rotor (1), and being closed, it allows the passage of air into the drying rotor (1) through the perforated sheet attached to the loading window frame (11).

In another preferred embodiment, each internal cavity of the drying rotor (1) contains one, two or three type 1 panels (13). In accordance with FIGURE 3, type 1 panels (13) are metallic or plastic structures that are secured by screws to plates (5) and (6). In a particular way, the type 1 panel is characterized by comprising a perforated metal or plastic sheet (13A) that protects the source of electromagnetic radiation (13C) and through its perforations allows the passage of radiation, a metal support (13B) to which the source of electromagnetic radiation (13C) and the metal or plastic sheet (13A) are attached by screws, and the source of electromagnetic radiation (13C) that corresponds to a fiberglass sheet that has printed carbon crystals and an electrical circuit.

Likewise, in accordance with FIGURE 4, type 2 panels are metallic or plastic structures that are secured by screws to the plates (5) and (6), and that have a sheet secured in their middle part that helps to move the beans inside the drying rotor (1). In a particular way, type 2 panel is characterized by comprising a perforated metal or plastic sheet (14A) that protects the source of electromagnetic radiation (14C) and allows radiation to pass through its perforations, a metal support (14B) to which the source of electromagnetic radiation (14C) and to the metal or plastic sheet (14A) are attached by screws and a source of electromagnetic radiation (14C) that corresponds to a fiberglass sheet that has carbon crystals printed on it and an electrical circuit.

Preferably, the type 1 (13) and type 2 (14) panels are connected to the manifold (22) which is an insulating piece that is mounted on the tip of the drive shaft (17) and rotates with it, and that it has two copper bushings that are connected to the thermal panels type 1 (13) and type 2 (14). The bushings of the manifold (22) receive the electrical current from the two brushes of the brush holder (21), which corresponds to an insulating piece installed on the manifold (22).

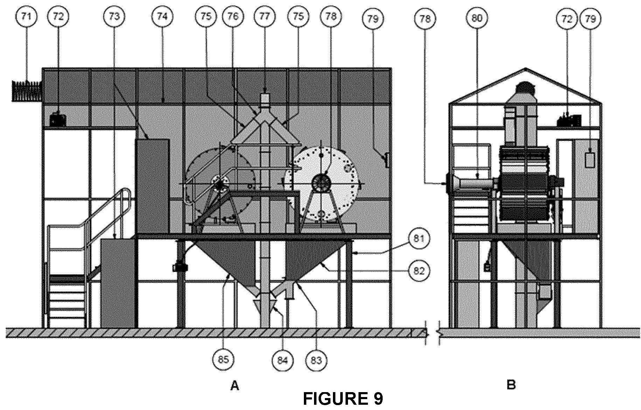

In a particular embodiment, the drying rotor (1) has a left metal bracket (2) that supports the metal bearing (4) that is connected to the extractor duct (80), as shown in FIGURE 9. Where the extractor duct (80) corresponds to a metal tube installed between the metallic bushing (10) and the extractor (78), that allows the passage of humid air sucked in by the extractor (78). Where the metal bearing (4) supports the left part of the drying rotor (1) in collaboration with the metallic bushing (10), which is a cast piece that rotates on the metal bearing (4). In a particular embodiment, the metal bearing (4) is fixed with screws to the left metal bracket and the metallic bushing (10) is tied on the left side with screws to the suction side plate (6).

In a particular embodiment, the drying rotor (1) has a right metal bracket (3), which supports the self-align bearing (20), the gear motor (24), the electric motor (29) and the protective cover (19).

In a particular embodiment of the invention, the drying rotor (1) comprises a mechanical system to ensure its rotation capacity, which is made up of a metallic drive shaft (17), a gear motor (24), and an electric motor (29) connected by a system of pulleys and wedges that ensure the transmission of movement, as shown in FIGURE 2.

Preferably, the electric motor (29) houses the wedge (28) that supports the small V-pulley (26). Where the small V-pulley (26) transmits its movement, through the v belt (27), to the large V-pulley (25) that is mounted on the horizontal axis the gear motor (24).

The gear motor (24) is a speed reduction box that has a horizontal and a transverse shaft mounted on ball bearings. The gear motor (24) comprises on the horizontal axis a helical pinion that transmits the movement to the transverse axis which has a worm screw installed. This device allows reducing the speed of the horizontal axis to the transverse axis and in turn changes the position of the transmission shafts. In turn, the transverse axis the gear motor (24) is attached to a small chain sprocket (30) by means of the wedge (23) and set screw (31).

On the other hand, the metallic drive shaft (17) has a flange and metallic reinforcements welded at one end., and also houses the wedge (18) that joins the drive shaft (17) to the large chain sprocket (32) that receives the movement of the link chain (33), which in turn comes from the small chain sprocket (30), which in turn is connected to the gear motor (24). The whole assembly rests on the Self align bearing (20) which is secured to the right metal bracket (3) and together they support the right part of the drying rotor (1). This entire system is covered by the protective cover (19) as shown in FIGURE 2.

In a further embodiment, the drying rotor of the invention comprises a thermometer (15) which is installed in the plate (6) located on the suction side of the drying rotor (1), and also includes a Lid for sampling (16) that corresponds to a transparent plastic cover which is installed on the plate (6) located on the suction side of the drying rotor (1) and that is easy to remove to allow the Sampling.

The invention also relates to the wet bean drying process comprising heating the bean in a controlled way and generate an air flow that evacuates the moisture extracted from the beans. In this way, the system of the invention allows each one of the cavities of the extraction rotor (1) to be loaded with wet beans., where wet beans come into contact with the electromagnetic radiation emitted by the thermal panels type 1 (13) and type 2 (14), that heat the bean in a controlled way by the radiation they emit. In turn, to the drying rotor (1) enters air, dry and hot, captured by the deflectors (12), through fixed vent covers (9) and loading window frames (11), which, once it has captured the evaporated water from the beans, is sucked using the extractor (78). In particular, the process of the invention allows the combination of i) the radiation provided to the beans through the thermal panels type 1 (13) and type 2 (14) and ii) the surrounding air, dry and warm, entered through the fixed ventilation caps (9) and the loading window frames (11), ensuring the proper temperature of the bean to remove water from them without affecting its quality.

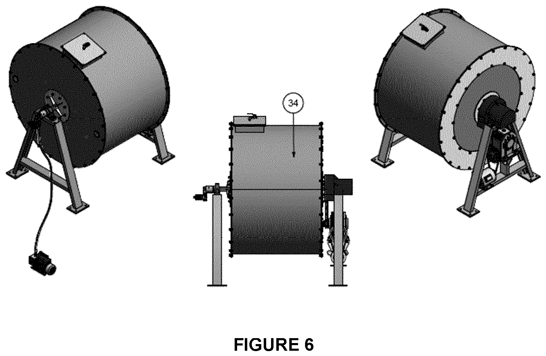

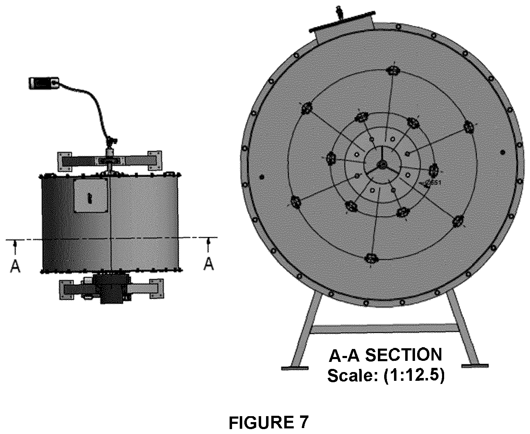

The invention also relates to a wet coffee drying system comprising a drying rotor (1), as in FIGURE 1, and a vacuum rest rotor (34) as in FIGURES 6 and 7.

In a particular embodiment, the vacuum rest rotor (34) comprises a cylinder (42), a rotor plate (40) on the suction side of the pump which is a metallic disk that is attached by screws to the cylinder (42) and an external plate (47) on the transmission side, which corresponds to a metal disc which is attached to the central plate (46) on the transmission side by means of screws. In a preferred mode, the central plate (46) on the transmission side is a metal disc, which in turn is secured to the drive shaft (48) by screws.

Inside, the vacuum rest rotor (34) comprises 6 to 12 metal reinforcement tubes (43), which are secured to the central plate (46) on the transmission side and to the plate (40) of the rotor on the suction side of the vacuum pump.

In a particular embodiment, the vacuum rest rotor (34) also comprises an electrical resistance (44), which is mounted on the resistance supports (45) installed inside the duct (66) in the center of the rotor. In a preferred mode, the center rotor duct (66) is a plastic or metal tube which is built with a perforated sheet and two flanges, that is secured with screws on one side to the transmission side center plate (46) and on the other side to the rotor plate on the suction side (40) of the vacuum pump. In a further embodiment, the vacuum rest rotor (34) comprises a vacuum rest rotor loading window cover (41), that corresponds to a metal or plastic sheet that is installed in the cylinder (42) by means of screws.

In another embodiment of the invention, the vacuum rest rotor (34) also comprises a left metal bracket (35) that supports the Self align bearing (36). Where the Self align bearing (36) supports the drive shaft (38) and is secured by screws to the left metal bracket (35) and together they support the left part the vacuum rest rotor (34). In turn, the drive shaft (38) is a metal part composed of a metal flange to which a steel shaft end and metal reinforcements are welded, and that is fastened on the left side to the rotor plate on the suction side of the pump (40) using screws. The set also comprises a thermometer (39) that is installed in the rotor plate on the suction side of the pump (40) and that is used to measure the temperature of the beans during the vacuum rest process.

The vacuum rest rotor (34) of the invention also comprises a vacuum generation system made up of a vacuum pump (67) that corresponds to an electric pump that extracts the air to the vacuum rest rotor (34). The vacuum pump (67) is connected to an interconnection hose (68), which corresponds to a plastic duct with fittings that is used to interconnect the vacuum pump (67) with the vacuum rest rotor (34). In a particular aditional embodiment, the suction system the vacuum rest rotor (34) also comprises a vacuum switch (70) to measure the vacuum with its fittings and bypass valve, a solenoid valve (69) which is a solenoid valve that allows air to pass into the vacuum pump only when the vacuum pump (67) is on, and a rotating air connector (37) that corresponds to a mechanical device that allows air to pass between the vacuum rest rotor (34) and the vacuum pump (67) when the vacuum rest rotor (34) is in motion and the vacuum pump (67) is permanently installed.

The vacuum rest rotor (34) of the invention also comprises a transmission system made up of a drive shaft (48) that is a metallic piece composed of a metallic flange to which a steel shaft end and metallic reinforcements are welded tied on the right side to the central plate (46) on the transmission side by means of screws. In a particular embodiment the drive shaft (48) It also houses the wedge (49) which carries the large chain sprocket (64) that is mounted on the shaft. The whole assembly rests on the Self align bearing (51) which is secured to the right metal bracket (61) and together they support the right part the vacuum rest rotor (34). In a preferred mode, the transmission system the vacuum rest rotor (34) also comprises a manifold (53) an insulating piece that is mounted on the tip of the drive shaft (48) and rotates with it, and that has two copper bushings that are connected to the electrical resistance (44). The two copper bushings of the manifold (53) are fed by the brush holder (52).

The transmission system of the vacuum rest rotor (34) also comprises an electric motor (60) that has its axis attached to a metal wedge (59), which drives the small V-pulley (57). Where the small V-pulley (57) is in turn attached to the v belt (58) and transmits the movement to the large V-pulley (56). Additionally, the large V-pulley (56) is mounted on the horizontal axis of the gear motor (55), so that movement of the v belt (58) is transmitted from the gear motor (55) to the small chain sprocket (62).

The gear motor (55), which is secured with screws to the right metal bracket (61), is a speed reduction box that has a horizontal and a transverse axis mounted on ball bearings. A helical pinion is installed on the horizontal axis that transmits the movement to the transverse axis which has a worm screw installed. This device allows reducing the speed from the horizontal axis to the transverse axis and in turn changes the position of the transmission shafts. Additionally, the small chain sprocket (62) that is installed on the cross shaft the gear motor (55) is attached to it by means of the wedge (54) and the set screw (63), so that the small chain sprocket (62) transmits the movement to the link chain (65), which in turn transmits the movement to the large chain sprocket (64) and this in turn transmits the movement to the vacuum rest rotor (34). Finally, the system is protected by a protective cover (50) that is fixed with screws to the right metal bracket (61).

In a particular embodiment, the wet bean drying system of the invention comprises a feeding system for the entry of the wet coffee to the drying rotor (1) and/or the vacuum rest rotor (34), comprising a hopper (82) a on the drying rotor side (1), a hopper (85) from the vacuum rest rotor (34) side, a hopper of the elevator load (84) that stores the beans that go to the elevator (77). Preferably, the elevator (77) transports the beans from a low level to a higher one towards the two-way valve (76) that allows unloading the beans in the drying rotor (1) and/or in the vacuum rest rotor (34) through Retractable Duct (75).

In a particular way, the system of the invention is characterized in that the hoppers (82) and (85) are used to deposit the beans from the drying (1) or vacuum (34) rotors to the hopper (84), process that is controlled by the action of the blade valve (83).

In a preferred mode, the wet coffee drying system comprising a drying rotor (1) and a vacuum rest rotor (34) is located in an area delimited by the support structure and access to rotors (74), and which is surrounded by the walls (86), (88), (89), (90), (91), (92), (93), (94), the roof (95) and the access doors (73). Where the walls (89), (92), (94) and the roof (95) can have solar panels on their surface in order to capture and store solar energy that is used to heat the surrounding air when drying rotor (1) . Said structure also comprises a dehumidifier (72) comprising a compressor, condensers, radiator, electrical connections and pipes through which Freon gas is circulated through the copper cooling coil (71) to lower the temperature of the surrounding air entering the structure (74), thus controlling the relative humidity in the vicinity of the drying system of the invention. In a particular embodiment, the system of the invention also comprises an electrical panel (79) that corresponds to a metal box that contains all the controls, starters, electrical and electronic protective covers to control the system of the invention.

The invention also refers to a wet bean drying process comprising two stages: a drying stage, a vacuum rest stage and a subsequent drying stage, which are successively repeated in an interleaved manner the number of times necessary to ensure minimal and/or optimal bean moisture.

The drying process of the invention, in its first drying stage, it is characterized by heating the bean in a controlled way and generating an air flow that evacuates the moisture extracted from the beans. In this way, the system of the invention makes it possible to load each of the drying rotor cavities (1) with wet beans., where the wet beans come into contact with the thermal radiation emitted by the thermal panels type 1 (13) and type 2 (14), which heat the bean in a controlled way through the radiation they emit. In turn, when drying rotor (1) captures by means of the collectors (12) the surrounding air that has been dried by the dehumidifier (72) and that has been heated by the solar panels of the walls (89), (92), (94) and ceiling (95), and enters it into the drying rotor 1 through the fixed ventilation caps (9) and the loading window frames (11). Said air, once it has captured the evaporated water from the beans, is sucked using the extractor (78). In particular, the system of the invention allows the combination of the radiation provided to the beans through the thermal panels type 1 (13) and type 2 (14) and the surrounding hot and dry air entered through the fixed vent caps (9) and the loading window frames (11) ensure the proper temperature of the bean to remove water from the bean without affecting its quality.

The drying process of the invention, in its second vacuum resting stage, involves transporting the coffee that has been dried in the first stage in a drying rotor (1) to the vacuum resting rotor (34), using the elevator (77). The bean is then subjected to a vacuum produced by the vacuum pump (67) and to a controlled temperature emitted by the resistance (44), which accelerates the migration of moisture to the surface, becoming a key factor for drying efficiency.

The drying process of the invention comprises a subsequent drying stage to the stage of rest in vacuum characterized by heating the bean in a controlled way and generate an air flow that evacuates the moisture extracted from the beans. In this way, the system of the invention makes it possible to load each of the drying rotor cavities (1) with wet beans., In this way, the system of the invention makes it possible to load each of the drying rotor cavities (1) with wet beans, that heat the bean in a controlled way by the radiation they emit. In turn, the drying rotor (1) captures through the collectors (12) the surrounding air that has been dried by the dehumidifier (72) and that has been heated by the solar panels of the walls (89), (92), (94) and the ceiling (95), and enters it into the drying rotor 1 through the fixed ventilation caps (9) and the loading window frames (11). Said air, once it has captured the evaporated water from the beans, is sucked using the extractor (78). In particular, the system of the invention allows the combination of the radiation provided to the beans through the thermal panels type 1 (13) and type 2 (14) and the surrounding hot and dry air entered through the fixed vent caps (9) and the loading window frames (11) ensure the proper temperature of the bean to remove water from the bean without affecting its quality.

In a preferred mode of the invention, the drying and vacuum rest stages are repeated at least once, at least twice, at least three times, at least four times, at least five times, or until the moisture of the beans reaches the required level.

### Example

In order to highlight the operation and advantages of the system and process disclosed, below is a comparison of average times used during a bean drying process using an traditional sun drying machine, a static drying machine, a rotary drying machine and the multi-stage system for drying beans disclosed in the present invention:

| **Process** | **Total time (*hours*)** | **Natural rest time (*hours*)** | **Vacuum rest time (*hours*)** |
|---|---|---|---|
| **Traditional sun dryer** | 150-200 | 75-100 | No |
| **Static drying machine** | 40-48 | 6-12 | No |
| **Rotary drying machine** | 40-48 | 4-6 | No |
| **Multi-stage system** | 12-18 | No | 6-9 |

From the above it is possible to affirm that the multistage system for drying beans disclosed in the present invention allows to radically reduce drying times, since compared to a static or rotary drying machine a 50% reduction in drying times is achieved, while compared to a traditional drying process in the sun, a reduction of about 90% in drying times is achieved.

The efficiency achieved through the system and process disclosed in the present invention corresponds in fact to a considerable advance compared to what is known in the prior art, since the drying stage has historically been the one that requires the greatest amount of time during the overall bean treatment process (for example, during the processing of coffee), thus becoming a practical and efficient alternative to reduce processing times (and therefore costs). Additionally, the drying process of the invention is 100% ecological, since it does not require the use of fossil fuels, and therefore there is no generation of polluting emissions.

## Claims

1. A rotor for drying wet beans, comprising inside a source of electromagnetic radiation, which is emitted in such a way that it is able to heat in a controlled and efficient way the wet beans inside the rotor, and an efficient ventilation system that allows air to enter, hot and dry, that passes through the beans and carries moisture away from them when it is extracted from the rotor.

2. The rotor for drying wet beans of claim 1, **characterized by** comprising at its end two plates (5) and (6), joined by at least seven, six, five or four fixed covers (8), at least one, two or three fixed vent caps (9), at least one, two or three loading window frames (11) and at least one, two or three air collector deflector (12), and where the interior the drying rotor (1) comprises internally at least one, two or three cavities, thermal panels type 1 (13) and 2 (14), and where the rotor is connected to an air extractor (78).

3. A wet bean drying process, comprising
entry of the wet beans to a drying rotor,
heating the wet beans through exposure to electromagnetic radiation emitted by the thermal panels that are located inside the drying rotor and emit electromagnetic radiation, and simultaneously
carry moisture out of the beans by an efficient ventilation system, that allows, through the baffles attached to cargo and fixed vent caps, the entry of dry and hot air by solar radiation, where said air, once it has captured the surrounding moisture in the cavities of the drying rotor, is removed by the action of an extractor.

4. Wet bean drying system, comprising
a drying rotor according to claim 1;
a vacuum rest rotor comprising a system for generating vacuum and a controlled source of heat; and
a bean feeding system that allows transport between the drying and vacuum rest rotors.

5. A wet bean drying process, comprising
entry of the wet beans to a drying rotor, where the wet beans are heated by exposure to electromagnetic radiation emitted by the thermal panels that are located inside the drying rotor and that emit electromagnetic radiation, and simultaneously drag the moisture out of the beans by an efficient ventilation system, that allows, through the baffles attached to cargo and fixed vent caps, the entry of dry and hot air by solar radiation, where said air, once it has captured the surrounding moisture in the cavities of the drying rotor, is removed by the action of an extractor;
one stage transporting the pre-dried beans from the drying rotor to the vacuum rest rotor;
a stage of rest in vacuum, which is produced by the vacuum pump at a controlled temperature emitted by a controlled heat source, which accelerates the migration of moisture to the surface, becoming a key factor for drying efficiency; and
entry of the wet beans to a drying rotor, where the wet beans are heated by exposure to electromagnetic radiation emitted by the thermal panels that are located inside the drying rotor and emit electromagnetic radiation, and simultaneously drag the moisture from the beans by an efficient ventilation system, that allows, through the baffles attached to cargo and fixed vent caps, the entry of dry and hot air by solar radiation, where said air, once it has captured the surrounding moisture in the cavities of the drying rotor, is removed by the action of an extractor

6. The wet bean drying process according to claim 4, where the drying and vacuum rest stages are repeated at least twice, at least three times, at least four times, at least five times or until the humidity of the beans reaches the required level.
